# EUROPEAN PATENT SPECIFICATION

(11) **EP 0 462 637 B1**
(45) Date of publication and mention of the grant of the patent: **08.09.1993**
(21) Application number: 91201284.6
(22) Date of filing: 28.05.1991
(51) Int. Cl.: F16H 55/36, F16H 55/56

(54) **Pulley arrangement for a transmission provided with a flexible transmission element**
Scheibe für Zugmittelgetriebe
Poulie pour transmission à lien de transmission flexible

(30) Priority: 19.06.1990 NL 9001392
(43) Date of publication of application: 27.12.1991
(73) Proprietor: VCST, B-3800 Sint-Truiden (BE)
(72) Inventor: van Rooij, Jacobus Hubertus Maria, NL-5674 AC Nuenen (NL); Cadee, Theodorus Petrus Maria, NL-5721 LS Asten (NL); van der Linden, Petrus Johannes Gerardus, NL-5508 DC Veldhoven (NL)
(74) Representative: Timmers, Cornelis Herman Johannes

(56) References cited:
- US-A- 2 413 817
- US-A- 3 142 997
- PATENT ABSTRACTS OF JAPAN, vol. 10, no. 114 (M-473)[2171], 26th April 1986; & JP-A-60 241 560 (USUI KOKUSAI SANGYO K.K.) 30-11-1985

## Description

The invention relates to a pulley arrangement according to the preamble of claim 1. Such arrangements are generally known per se.

In order to limit the wear caused as a result of the high stresses on such pulleys, and also in order to increase their service life, such pulleys are made of a high-grade high-alloy steel, which considerably increases the cost of a transmission provided with such pulleys. Practice has shown that, during use and under certain operating conditions the problem arises that such transmissions produce a disturbing noise depending on, inter alia, load, transmission ratio and speed of rotation, which constitutes a problem in particular if they are in the form of a continuously variable transmission for use in motor vehicles.

The object of the invention is to propose a design of such a pulley arrangement which results in a considerably cheaper construction. This object is achieved by the measures described in the characterizing part of the main claim.

It was surprisingly found that these measures not only reduce the cost considerably, but also considerably reduce the level of the noise caused during operation. It is felt that the explanation for this unexpected effect must be sought in the damping action of the adhesive layer present between pulley bearing surface and pulley.

Besides, the fact that only the bearing surfaces of the pulley system need be made from a high-grade steel means that it is possible, depending on the manufacturing process for this system (forging, casting, sintering etc.) to select a material appropriate to this process which would otherwise, for cost reasons never have been considered.

Preferred embodiments of the invention are indicated in claims 2 - 8.

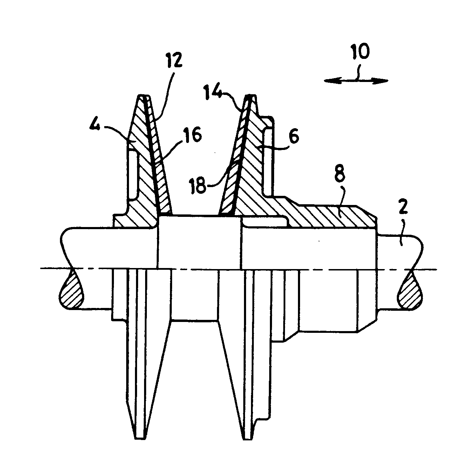

The invention is explained with reference to the drawing. The single figure thereof shows a practical embodiment of a pulley system according to the invention.

In the figure, reference numeral 2 indicates a shaft of a continuously variable transmission, and reference numeral 4 a pulley half made integral therewith. A second pulley half 6 is integral with the hub 8 and can be fitted on said shaft so that it slides in the direction of the arrows 10.

The pulley halves are destined to co-operate with a flexible transmission element which can be a chain with hinge pins interconnected by links, or a belt comprising transverse elements fitted on a metal support.

According to the invention, the pulley surfaces co-operating with the power-transmitting elements of the transmission element (pins, transverse elements) are formed by thin-walled bearing surfaces made from a high-alloy steel, for the pulley half 4 indicated by 12, and for the pulley half 6 indicated by 14. The two bearing surfaces are fixed to said pulley halves by means of a suitable adhesive layer, for the pulley half 4 indicated by 16, and for the pulley half 6 indicated by 18.

A suitable adhesive is a polyurethane adhesive. The base material which has been found suitable for the shaft 2 with the pulley half 4 and the pulley half 6 with the hub 8 is carbon steel and cast iron respectively, while for the bearing surface a through-hardening tool steel can be used.

## Claims

1. Pulley arrangement for a variable transmission provided with a flexible transmission element, in particular a continuously variable transmission, comprising two metal pulley halves (4, 6) supported by a shaft (2), characterized in that in at least one of the pulley halves (4) the surface thereof co-operating with the transmission element is covered with a pulley bearing surface (12) made of high-grade steel and fixed thereto by means of a suitable adhesive (16).

2. Pulley arrangement according to claim 1, characterized in that in both of the pulley halves (4, 6) the surface co-operating with the transmission element is covered with a pulley bearing surface (12, 14) made of high-grade steel and fixed thereto by means of a suitable adhesive (16, 18).

3. Pulley arrangement according to claim 1 or 2, characterized in that the adhesive (16, 18) is a polyurethane adhesive.

4. Pulley arrangement according to claims 1 - 3, characterized in that the pulley bearing surface (12, 14) is made of through-hardening tool steel.

5. Pulley arrangement according to claims 1 - 4, characterized in that the pulley halves (4, 6) are made of carbon steel.

6. Pulley arrangement according to claims 1 - 4, characterized in that the pulley halves (4, 6) are made of cast iron.

7. Pulley arrangement according to claims 1 - 4, characterized in that the pulley halves (4, 6) are made of sintered metal.

8. Pulley arrangement according to claims 1 - 7, characterized in that one of the pulley halves (4) is integral with a shaft (2) of the transmission, while the other pulley half (6) is fitted on said shaft such that it can slide in the axial direction (10).

## Patentansprüche

1. Riemenscheibenanordnung für ein veränderliches Getriebe, das mit einem flexiblen Übertragungselement versehen ist, insbesondere für eine stufenlos veränderliche Übersetzung, mit zwei Riemenscheibenhälften (4, 6) aus Metall, die auf einer Welle (2) sitzen, **dadurch gekennzeichnet,** daß bei mindestens einer der Riemenscheibenhälften (4), die mit dem Übertragungselement zusammenwirkende Oberfläche mit einer Riemenscheibenlauffläche (12) aus Stahl hoher Güte überdeckt und mit Hilfe eines geeigneten Klebers (16) daran befestigt ist.

2. Riemenscheibenanordnung nach Anspruch 1, **dadurch gekennzeichnet**, daß bei beiden Riemenscheibenhälften (4, 6), die mit dem Übertragungselement zusammenwirkende Fläche mit einer Riemenscheibenlagerfläche (12, 14) aus Stahl hoher Güte überdeckt und durch einen geeigneten Kleber (16, 18) daran befestigt ist.

3. Riemenscheibenanordnung nach Anspruch 1 bis 2, **dadurch gekennzeichnet,** daß der Klebstoff (16, 18) ein Polyurethan-Klebstoff ist.

4. Riemenscheibenanordnung nach Anspruch 1 bis 3 **dadurch gekennzeichnet,** daß die Riemenscheibenlagerfläche (12, 14) aus einem durchgehärteten Werkzeugstahl gebildet ist.

5. Riemenscheibenanordnung nach Anspruch 1 bis 4, **dadurch gekennzeichnet,** daß die Riemenscheibenhälften (4, 6) aus Kohlenstoffstahl gemacht sind.

6. Riemenscheibenanordnung nach Anspruch 1 bis 4, **dadurch gekennzeichnet,** daß die Riemenscheibenhälften (4, 6) aus Gußeisen gemacht sind.

7. Riemenscheibenanordnung nach Anspruch 1 bis 4, **dadurch gekennzeichnet,** daß die Riemenscheibenhälften (4, 6) aus gesintertem Metall gemacht sind.

8. Riemenscheibenanordnung nach Anspruch 1 bis 7, **dadurch gekennzeichnet,** daß eine der Riemenscheibenhälften (4) einstückig mit der Welle (2) des Getriebes hergestellt ist, während die andere Riemenscheibenhälfte (6) derart auf die Welle aufgesetzt ist, daß sie darauf in axialer Richtung (10) verschiebbar ist.

## Revendications

1. Système de poulie pour transmission variable munie d'un élément de transmission souple, en particulier transmission continûment variable, comprenant deux demi-poulies (4, 6) en métal portées par un arbre (2), caractérisé en ce que, dans au moins une (4) des demi-poulies, la surface de celle-ci qui coopére avec l'élément de transmission étant recouverte d'une surface de portée de poulie (12) en acier de très haute qualité qui est fixée à celle-ci au moyen d'un adhésif approprié (16).

2. Système de poulie suivant la revendication 1, caractérisé en ce que, dans les deux demi-poulies (4, 6), la surface qui coopére avec l'élément de transmission est recouverte d'une surface de portée de poulie (12, 14) en acier de très haute qualité qui est fixée à celles-ci au moyen d'un adhésif approprié (16, 18).

3. Système de poulie suivant la revendication 1 ou 2, caractérisé en ce que l'adhésif (16, 18) est un adhésif au polyuréthanne.

4. Système de poulie suivant les revendications 1 à 3, caractérisé en ce que la surface de portée de poulie (12, 14) est en acier d'outillage trempé à coeur.

5. Système de poulie suivant les revendications 1 à 4, caractérisé en ce que les demi-poulies (4, 6) sont en acier au carbone.

6. Système de poulie suivant les revendications 1 à 4, caractérisé en ce que les demi-poulies (4, 6) sont en fer moulé.

7. Système de poulie suivant les revendications 1 à 4, caractérisé en ce que les demi-poulies (4, 6) sont en métal fritté.

8. Système de poulie suivant les revendications 1 à 7, caractérisé en ce que une des demi-poulies (4) est solidaire d'un arbre (2) de transmission tandis que l'autre demi-poulie (6) est monté sur ledit arbre de manière qu'elle peut glisser dans la direction axiale (10).
